# FASCICULE DE BREVET EUROPEEN

(11) **EP 1 762 137 B1**
(45) Date de publication et mention de la délivrance du brevet: **05.03.2008**
(21) Numéro de dépôt: 06358014.6
(22) Date de dépôt: 30.08.2006
(51) Int. Cl.: A01G 17/02

(54) **Machine d'élagage et/ou d'écimage modulaire électrique**
Modulare und elektrische Ästungsvorrichtung
Modular electric pruning machine

(30) Priorité: 09.09.2005 FR 0509201
(43) Date de publication de la demande: 14.03.2007
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- DE-A1- 4 240 866
- FR-A- 2 412 436
- FR-A- 2 850 328
- US-A- 4 455 815
- US-A- 5 551 220

## Description

La présente invention concerne une machine d'élagage et/ou d'écimage modulaire électrique, utilisable en agriculture, viticulture, arboriculture fruitière ou forestière, ou pour le débroussaillage selon la revendication 1.

Plus spécialement dans le domaine de la viticulture, on connaît des machines du genre rogneuses, écimeuses, élagueuses, comportant des barres de coupe constituées d'une rangée de lames à déplacement alternatif ou de lames mobiles fixées sur une courroie ou sur une chaîne s'enroulant sur deux roues espacées et effectuant la coupe des rejets de sarments au passage des dents d'une contre-lame fixe (par exemple FR-2.239.191, FR-2.329.191, FR-2.019.417).

On conçoit que ces barres de coupe lourdes, encombrantes et coûteuses ne peuvent être standardisées pour répondre à toutes les conformations d'arbustes (pieds de vigne ou autres) à élaguer et/ou à écimer, de sorte que les constructeurs sont conduits à proposer une grande variété de modèles, ce qui pose des problèmes d'investissement et de stockage. En outre, l'actionnement de ces barres de coupe, en cours de travail, nécessite une importante consommation d'énergie, tandis qu'elles s'encrassent très rapidement, ce qui nuit à la netteté de la coupe.

On connaît aussi des machines du genre susvisé (par exemple FR-2.423.142, FR-2.594.630, FR-2.787.966, FR-2.832.024), selon lesquelles les ensembles de coupe, horizontaux et latéraux, sont constitués d'outils de coupe rotatifs juxtaposés ou superposés entraînés en rotation au moyen de moteurs hydrauliques et de poulies et courroies de transmission.

Dans le document FR-2.594.630 susmentionné, chaque ensemble de coupe est constitué de modules assemblés les uns à la suite des autres, chaque module étant formé d'un carter modulaire profilé lequel est fixé, par l'intermédiaire d'un boîtier rapporté et d'un roulement à billes, un arbre creux sur lequel sont montés, d'un côté, une lame (5) et, de l'autre côté, une poulie double, l'entraînement de la poulie de l'un des modules étant réalisé par un moteur hydraulique, tandis que l'entraînement des modules non directement motorisés est obtenu par l'intermédiaire de leur poulie double et de courroies.

Dans le document FR-2.832.024, est décrite une barre de coupe de rogneuse constituée d'une pluralité de modules de coupe superposés montés le long d'une poutre d'ossature et comportant un couteau rotatif à double lame ; l'un des modules est entraîné en rotation par un moteur hydraulique qui entraîne également une poulie de sorte que le mouvement de rotation est transmis au couteau du module adjacent qui le transmet à son tour à l'organe de coupe du module suivant (et ainsi de suite si la barre de coupe comprend plus de trois modules de coupe), chaque fois par l'intermédiaire d'une poulie et d'une courroie de transmission.

Les systèmes de coupe utilisant des couteaux rotatifs entraînés au moyen de moteurs hydrauliques et de courroies de transmission, basés sur une construction modulaire ou non, ont notamment pour inconvénients :
- la difficulté d'obtenir et de maintenir une bonne tension des courroies de transmission, de sorte que les courroies patinent et chauffent ; tandis que le réglage de la tension de l'une des courroies entraîne souvent un dérèglement de la tension des autres ;
- l'obligation d'aligner les arbres d'entraînement en rotation des couteaux, de sorte que les barres de coupe ne peuvent être que rectilignes ;
- la nécessite d'enfermer les courroies de transmission dans un coffrage pour supprimer les risques d'accrochage dans la végétation, ce qui entrave l'accès auxdites courroies en cas de nécessité ;
- le risque de pollution de l'environnement en cas de fuite d'huile.
- la difficulté d'assurer des vitesses de rotation élevées aux outils de coupe, pourtant nécessaires pour obtenir des coupes franches.

D'autres inconvénients importants des systèmes de coupe modulaires hydrauliques sont constitués par :
- un montage complexe comprenant notamment de nombreux tuyaux hydrauliques flexibles manquant de souplesse et encombrants;
- un poids élevé qui alourdit la barre de coupe.

En effet, les écimeuses multi-rangs hydrauliques en particulier, nécessitent le branchement en série des moteurs hydrauliques. Ce branchement est limité car rapidement les pressions différentielles sont insuffisantes pour avoir les coupes requises par moteur. Ce montage en série présente d'autre part l'inconvénient majeur de charger en pression les joints d'arbre qui deviennent dès lors extrêmement fragiles, ce qui provoque rapidement les fuites d'huile. Pour remédier à cet inconvénient, il est nécessaire d'ajouter un flexible de drainage de façon à ce que les joints d'arbre ne soient pas mis en pression.

Ce montage complique encore l'ensemble, car les flexibles de drainage doivent directement retourner au réservoir hydraulique sans aucun raccord, ni coupleur, afin d'éviter la moindre contre-pression.

Au-delà de 4 à 6 moteurs hydrauliques montés en série, la problématique devient telle qu'aucun constructeur ne se risque à des montages plus importants. Il est donc nécessaire pour les machines multi-rangs de faire appel à des diviseurs de débit multiples montés les uns à la suite des autres, ce qui provoque des laminages d'huile, lesquels génèrent de la chaleur difficile à évacuer. Le rendement d'une telle installation est très médiocre.

D'autre part, il faut savoir que si les machines à couteaux rotatifs sont utilisées depuis de nombreuses années et présentent l'avantage de pouvoir travailler à des vitesses d'avancement rapides, ce système de coupe présente toutefois l'inconvénient de faire des projections et notamment des petits confettis de feuilles qui sont préjudiciables à la santé de la vigne et très souvent vecteurs de maladies cryptogamiques. Il est aussi reproché à ces machines d'être dangereuses. Des normes européennes de sécurité ont toutefois été établies pour protéger l'opérateur. Ces machines qui donnent de bons résultats lors du premier écimage au mois de juin sur les jeunes pousses, travaillent beaucoup moins bien dès que le bois est aoûté, lors du deuxième passage mais surtout lors de l'écimage avant vendange. En effet, sur le bois dur la végétation est secouée, ce qui est préjudiciable à la récolte ; les coupes ne sont pas nettes et les blessures dans le bois sont là aussi des vecteurs de maladie.

Le remède pour palier ces inconvénients est connu depuis longtemps puisque pour éviter les projections et faire des coupes franches, il est nécessaire que les couteaux par exemple d'environ 34 cm de diamètre tournent à des vitesses élevées supérieures à 3000 tours/min. Cependant, ces vitesses rapides ne peuvent pas être facilement atteintes avec les moteurs hydrauliques.

La présente invention concerne une machine d'élagage et/ou d'écimage modulaire électrique permettant notamment de remédier aux inconvénients ci-dessus des machines décrites dans les différents documents susmentionnés.

On a déjà proposé (US-4.455.815) une machine d'élagage comportant une barre de coupe constituée par la juxtaposition de dispositifs de coupe comprenant, chacun, un outil de coupe rotatif et un moteur électrique à courant continu pour l'entraînement individuel en rotation de cet outil, l'ensemble des moteurs individuels d'entraînement étant alimenté en courant continu au moyen d'une batterie.

Ce dispositif présente de sérieux inconvénients dûs à l'utilisation de moteurs électriques à courant continu. En effet, l'alimentation en courant continu conduit à utiliser des moteurs à balais dont la durée de vie est limitée ou des moteurs sans balais mais faisant appel à une électronique coûteuse. En outre, la vitesse de rotation de ces moteurs n'est pas constante, cette vitesse variant en fonction du couple. Enfin, le prix de revient de ces moteurs est généralement élevé.

On a aussi proposé (par exemple, FR-2.412.436 et FR-2.850.328) de réaliser un entraînement électrique d'outils agricoles à partir de la prise de force d'un tracteur agricole, via un système de transformation de l'énergie mécanique en énergie électrique, ce système comprenant un générateur électrique tel qu'un alternateur, une transmission permettant de relier la prise de force du tracteur au rotor de l'alternateur, ce générateur électrique permettant d'alimenter le moteur électrique d'entraînement d'une ou plusieurs machines agricoles. Il s'agit toutefois de documents décrivant un principe d'entraînement de machines, par exemple de faucheuse d'herbe, mais qui n'abordent pas les applications de ce principe à des domaines spécifiques, ni, par conséquent, les solutions aux problèmes que peuvent poser de telles applications.

L'invention concerne l'application dudit principe au domaine spécifique des machines d'élagage et/ou d'écimage.

Selon une première disposition caractéristique, l'élagueuse et/ou écimeuse selon la revendication 1 est remarquable en ce qu'elle comprend au moins une barre de coupe essentiellement constituée par la juxtaposition de modules de coupe comprenant, chacun, un outil de coupe rotatif et un moteur électrique asynchrone triphasé d'entraînement individuel en rotation de cet outil.

Grâce à cette construction modulaire, il est possible d'adapter rapidement et facilement, en fonction des travaux spécifiques à exécuter, l'architecture ou conformation de l'ensemble de coupe de la machine.

Selon une autre disposition caractéristique, la barre de coupe comprend une ossature allongée, par exemple constituée par un tube métallique, sur laquelle sont montés les modules de coupe, les uns à la suite des autres, de manière amovible et interchangeable.

Selon un mode d'exécution, l'élément d'ossature constituant I"'épine dorsale" de la barre de coupe, peut être rectiligne, mais selon une autre disposition caractéristique, il présente au moins une portion courbe, rentrante ou sortante.

De la sorte, la barre de coupe peut être droite ou avoir des formes variées en fonction par exemple de la conformation des arbustes à élaguer ou à écimer ou du résultat recherché.

Selon une autre disposition caractéristique, les moteurs électriques de l'ensemble des modules de chaque barre de coupe sont reliés électriquement les uns aux autres, en parallèle, par des câbles à trois fils.

Selon une autre disposition caractéristique, un boîtier à bornes est associé au moteur électrique de chaque module de coupe, ce boîtier permettant l'alimentation dudit moteur électrique et la connexion de ce dernier, en parallèle, avec le moteur du ou des modules adjacents, ou avec la source d'alimentation électrique.

Selon une autre disposition caractéristique, le boîtier de connexion renferme un système de protection du moteur électrique en température et en surintensité.

Selon une autre disposition caractéristique, le moteur électrique de chaque module de coupe est configuré pour pouvoir entraîner l'outil de coupe dudit module en rotation, à des vitesses supérieures à 3000 tours/minute.

De manière intéressante, le moteur électrique de chaque module de coupe est configuré pour fonctionner sous des fréquences supérieures à 60 Hertz, par exemple sous une fréquence de 100 Hertz, de façon à éviter des pertes électriques fer conduisant à un échauffement excessif dudit moteur.

Selon une autre disposition caractéristique, les flasques du moteur électrique de chaque module de coupe sont conformés et agencés pour permettre, d'une part, la fixation d'un carter de protection et le positionnement du module sur une ossature de la barre de coupe et, d'autre part, le pincement du boîtier de connexion associé audit module.

Selon un mode d'exécution avantageux, l'outil de coupe de chaque module de coupe est monté sur l'arbre moteur de ce dernier au moyen d'un système sécurisé comprenant : - une goupille traversant un perçage diamétral débouchant dans une gorge périphérique ménagée dans l'extrémité de l'arbre moteur; - une barrette de montage en deux parties comportant, chacune, une extrémité échancrée pour se loger dans ladite gorge et autour du fond de celle-ci et un perçage borgne débouchant au centre de l'échancrure pour le logement de l'une des portions extrêmes de la goupille, l'outil de coupe étant fixé sur cette barrette de montage au moyen de vis traversant des trous que présente ledit outil de coupe et se vissant dans des taraudages transversaux que présente chacune des deux demi-parties de la barrette de montage.

Ce montage empêche l'éjection des couteaux en cas de rupture de la goupille de fixation.

Selon une autre disposition caractéristique, l'extrémité de l'arbre d'entraînement de chaque module est munie de deux gorges périphériques munie d'un perçage diamétral traversant, pour permettre un montage décalé des barrettes de fixation de deux modules voisins, de sorte à obtenir un montage rapproché et en quinconce des outils de coupe de la barre de coupe.

Selon une autre disposition caractéristique, les outils de coupe sont constitués par des couteaux à double coupe exécutés en acier traité à très haute limite élastique et dont l'épaisseur n'excède par 1,5 mm, chacune des coupes comportant un bord tranchant et un bord opposé plié formant renfort.

La fine épaisseur de ces couteaux évite le collage de la sève en réduisant l'inertie. En outre, ils sont très facilement interchangeables et ré-affutables.

Selon une autre disposition caractéristique, la machine d'élagage et/ou d'écimage selon l'invention, comprend un alternateur configuré pour produire un courant alternatif triphasé pour l'alimentation des moteurs électriques des modules de coupe, et des moyens d'entraînement en rotation du rotor de cet alternateur par le moteur thermique d'un tracteur agricole, par exemple via la prise de force ou la courroie du ventilateur de celui-ci, ou par le système hydraulique dudit tracteur.

En résumé, grâce aux dispositions caractéristiques ci-dessus de la présente invention, l'ensemble des inconvénients susmentionnés des machines du genre rogneuses, élagueuses, écimeuses ou analogues, utilisant des outils de coupe rotatifs, se trouvent éliminés.

On conçoit que le montage, en parallèle, d'une pluralité de modules de coupe électriques sur un seul réseau électrique permet un montage d'un nombre important de moteurs reliés entre eux uniquement par de simples câbles électriques triphasés. Ce montage génère très peu d'échauffement et peu de perte d'énergie. Dès lors, il sera très facile de concevoir des écimeuses multi-rangs sur les tracteurs enjambeurs qui de plus, très souvent, disposent d'une hydraulique très limitée ainsi que sur les machines à vendanger où il sera possible, compte tenu de la facilité de montage et de la faible énergie utilisée d'accoupler l'écimeuse électrique selon l'invention utilisée pour l'élagage de la vigne ou autres arbustes avec d'autres machines agricoles utilisables à la même saison pour l'accomplissement d'une autre tâche et comportant des organes actifs entraînés électriquement à partir d'une source de production de courant commune. Par exemple, il sera possible de faire cohabiter l'écimage avec la pulvérisation multi rangs. Ce montage permettra de réaliser, en un seul passage, ces deux opérations, ce qui, dans le cadre de la réduction des coûts des travaux de la vigne, est un atout très important.

La facilité d'adaptation des modules de coupe électriques devrait permettre aux nombreux viticulteurs de modifier leur machine et de remplacer les modules hydrauliques par des modules électriques sur les châssis existants. Cette opération extrêmement simple est à la portée technique de tout viticulteur.

Les buts, caractéristiques et avantages ci-dessus, et d'autres encore, ressortiront mieux de la description qui suit et des dessins annexés dans lesquels :
La figure 1 est un exemple de configuration possible d'une élageuse-écimeuse pourvue d'un système de coupe selon l'invention.
La figure 2 illustre un exemple de configuration d'une barre de coupe multidirectionnelle réalisée selon l'invention.
La figure 3 est une vue d'une portion de barre de coupe constituée par la juxtaposition de modules de coupe, considérée suivant sa face interne.
La figure 4 est une vue comparable de cette portion de barre de coupe considérée selon sa face externe.
La figure 5 est une vue en perspective d'un module de coupe considéré suivant sa face externe.
La figure 6 est une vue en perspective de ce module considéré selon sa face interne.

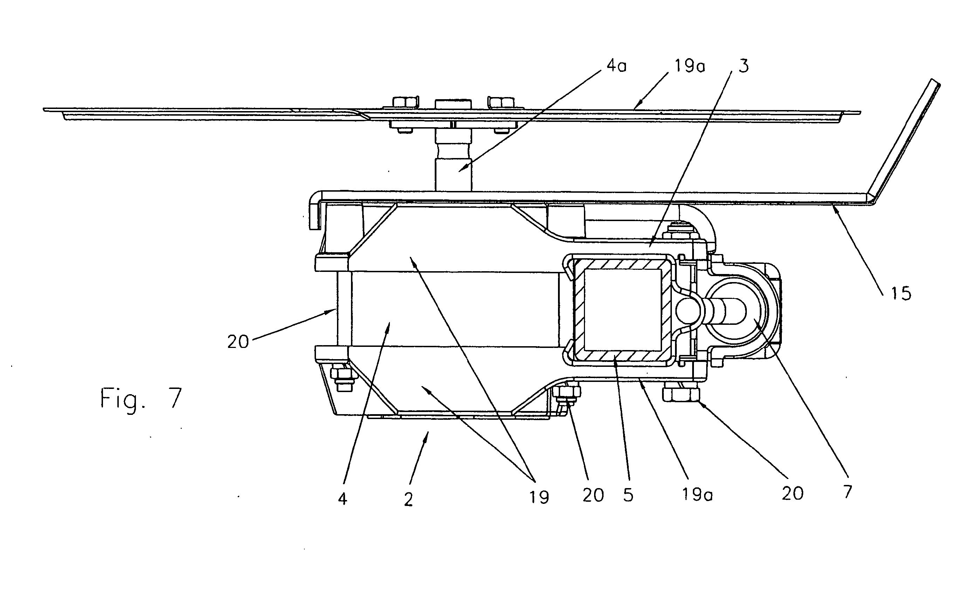

La figure 7 est une vue en plan illustrant le positionnement de ce module sur une ossature constituée par un tube de section carrée.
La figure 8 est une vue en perspective d'un boîtier électrique permettant l'alimentation du moteur électrique et sa connexion en parallèle avec le moteur électrique du ou des modules de coupe adjacents, ou avec la source de courant électrique alternatif triphasé.
La figure 9 est une vue en coupe axiale de ce boîtier.
La figure 10 est un schéma du circuit électrique du boîtier.
La figure 11 est une vue de face d'un exemple de réalisation d'un couteau constituant l'outil de coupe des modules de coupe.
La figure 12 est une vue en coupe suivant la ligne 12-12 de la figure 11.
La figure 13 est une vue en perspective éclatée illustrant les moyens de fixation sécurisé d'un couteau rotatif sur l'extrémité d'un arbre moteur.
La figure 14 est une vue en perspective illustrant la fixation de ce couteau sur ladite extrémité.
La figure 15 est une vue en coupe diamétrale de ce dispositif de fixation.
La figure 16 est une vue en coupe selon la ligne 16-16 de la figure 15.
La figure 17 est une vue partielle, en perspective, montrant les moyens de réglage en hauteur et de l'écartement des barres de coupe de la machine.
La figure 18 est un exemple de réalisation d'un releveur de végétation équipant l'extrémité basse d'une barre de coupe.

On se reporte auxdits dessins pour décrire une forme de réalisation intéressante, quoique non limitative de la machine d'élagage et/ou d'écimage électrique modulaire selon l'invention.

En fonction des travaux spécifiques à réaliser, et/ou de la topographie des plantations d'arbres ou arbustes (vigne ou autres), et/ou du type de véhicule porteur, la configuration des machines d'élagage et/ou d'écimage peut être très variée ; l'un des buts de l'invention étant de permettre une adaptation facile de l'architecture des barres de coupe de ces machines aux problèmes résultant de cette situation.

Notamment, de telles machines peuvent être, selon le cas, montées à l'avant ou à l'arrière d'un tracteur agricole (par exemple écimeuse interligne), ou à l'avant d'un tracteur enjambeur (par exemple écimeuse 2 rangs), ou à l'avant et à l'arrière d'un porteur multifonctions (par exemple écimeuse 3 rangs), voire latéralement.

Ces machines comportent un bâti B agencé pour pouvoir être monté fixement sur le châssis d'un véhicule porteur et dont la conformation et les dimensions sont adaptées au type de porteur et aux résultats recherchés. Ce bâti supporte des bras ou éléments porteurs mobiles P sur lesquels sont fixées les barres de coupe ; des moyens permettant un réglage de la position de celles-ci en hauteur, un réglage de leur écartement et un réglage de leur inclinaison par rapport à la verticale ou par rapport à l'horizontale.

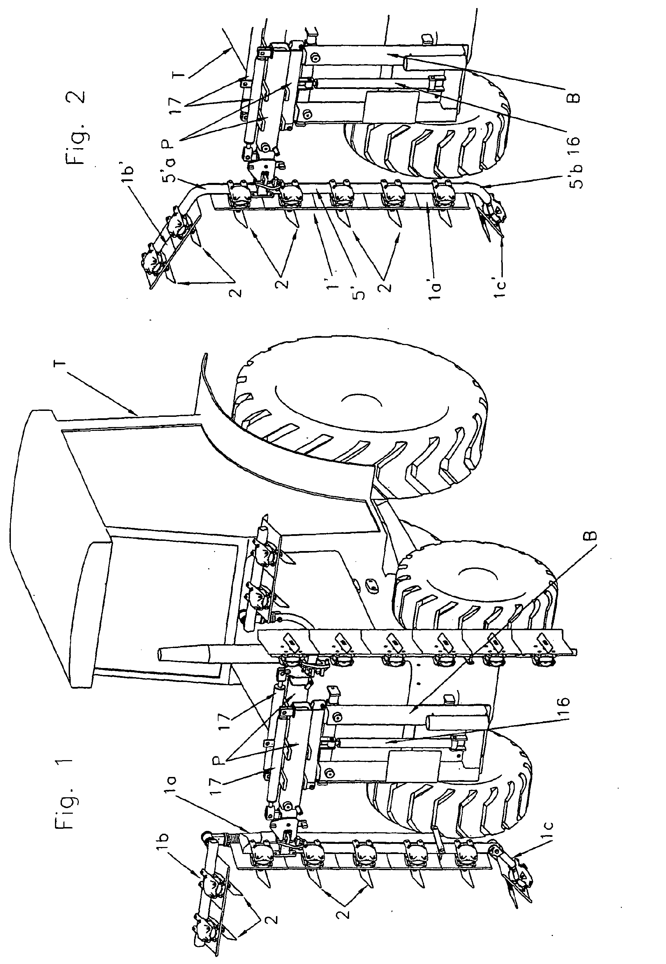

La figure 1 illustre une machine dite "écimeuse interligne" montée à l'avant d'un tracteur agricole T.

Il n'est pas nécessaire de décrire, de façon détaillée, un exemple de construction du bâti B et des éléments porteurs mobiles P, ces différents moyens qui peuvent avoir des conformations variées étant bien connus de l'homme de l'art.

Selon l'invention, la machine comporte au moins une barre de coupe 1, 1a, 1b, 1c, ... essentiellement constituée par la juxtaposition de modules de coupe 2 comprenant, chacun, un outil de coupe rotatif 3 et un moteur électrique asynchrone triphasé 4 pour l'entraînement individuel en rotation de cet outil.

Selon un mode d'exécution avantageux, ces modules sont montés les uns à la suite des autres, de manière amovible et interchangeable, sur une ossature allongée 5, de préférence constituée par un solide tube métallique de section carrée ou autre, par exemple de 40 x 40 mm.

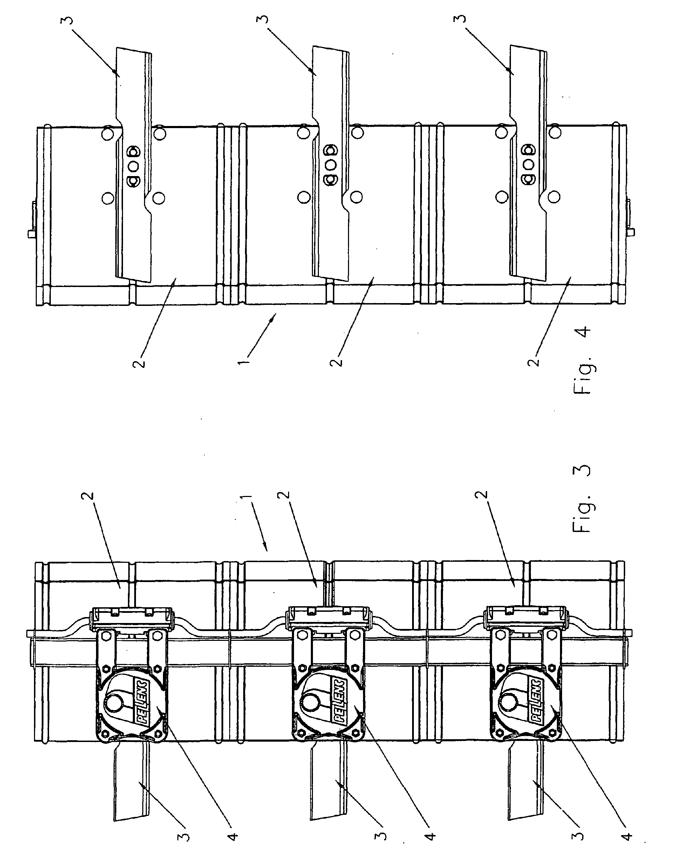

Cet élément d'ossature 5 peut être rectiligne de sorte à réaliser, après montage des modules de coupe, une barre de coupe droite (figures 1, 3 et 4). Il peut aussi avantageusement comporter au moins une portion courbe, par exemple obtenue par cintrage du tube constituant ledit élément, de sorte à réaliser, après mise en place desdits modules de coupe, une barre de coupe présentant une forme cintrée correspondante (figure 2).

Il est ainsi possible, comme le montre la figure 2, de réaliser des barres de coupe cintrées 1' constituées d'un unique élément d'ossature 5' sur lequel sont montés, les uns à la suite des autres, et d'une extrémité à l'autre dudit élément, plusieurs modules de coupe électriques 2. De la sorte, on obtient une barre de coupe multidirectionnelle comportant une partie intermédiaire 1a' droite ou non, capable d'effectuer l'élagage latéral des arbustes, une partie supérieure courbée 1b' apte à effectuer l'écimage de ces derniers et une partie inférieure 1c' courbée pour effectuer la coupe des branches basses.

Selon une importante disposition caractéristique de l'invention, les moteurs électriques 4 des modules de coupe 2 sont des moteurs électriques asynchrones triphasés. Ces moteurs électriques asynchrones triphasés ont été conçus pour travailler en régime permanent avec un rendement élevé, par exemple avec un rendement de 92 % ; ils peuvent supporter des puissances élevées atteignant 1 KW, sans risque de détérioration. Un système interne (connu en soi) permet de protéger le moteur des effets des surchauffes éventuelles.

Avantageusement, le moteur électrique 4 des modules de coupe est configuré pour pouvoir entraîner l'outil de coupe à des vitesses élevées supérieures à 3000 tours/minute.

Les moteurs électriques 4 des modules 2 sont reliés, électriquement, en parallèle, les uns aux autres, par des câbles 6 à trois fils de petite section.

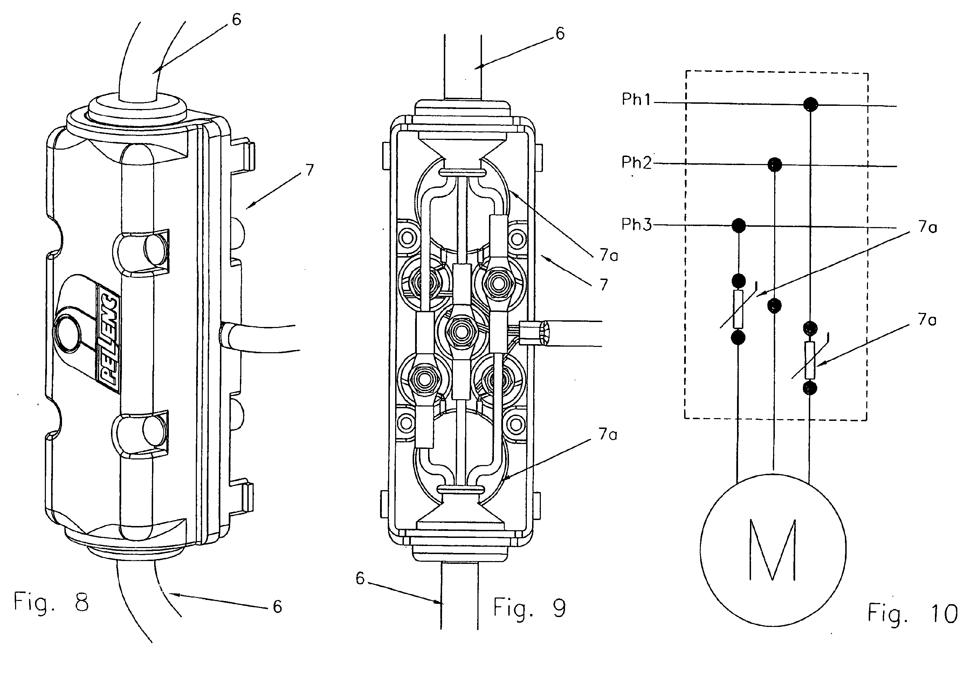

Selon une autre disposition avantageuse, un boîtier à bornes 7 (figures 8 et 9) est associé au moteur électrique 4 de chaque module de coupe 1, ce boîtier permettant l'alimentation électrique dudit moteur et la connexion en parallèle de ce dernier avec le moteur du ou des modules de coupe adjacents, ou avec la source d'alimentation électrique.

Le boîtier de connexion 7 renferme un système de protection du moteur électrique 4 auquel il est associé, en température et en surintensité.

Ce système peut être constitué de dispositifs de coupure 7a d'au moins deux (par exemple Ph1 et Ph 3, figure 10) des trois phases Ph 1, Ph 2, Ph 3, ces dispositifs de coupure pouvant être constitués par des fusibles thermiques, ou par des fusibles d'intensité, ou par des disjoncteurs thermiques, ou par des disjoncteurs d'intensité, ou, encore, par des thermistances à coefficient de température positif (CTP).

Ce système de protection permet d'éviter que le moteur ne soit détériorié, en cas de blocage des outils en cours de travail. Il permet d'arrêter le moteur en cas de température trop importante, ou en cas de courant trop important. Il peut, par exemple, être réarmable automatiquement.

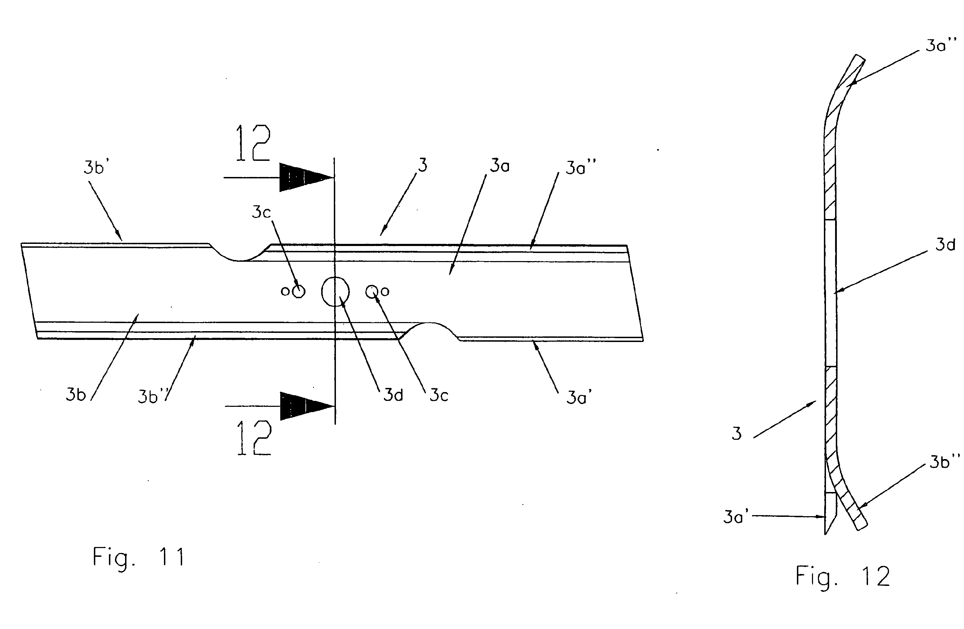

L'outil de coupe 3 de chaque module de coupe 2 est avantageusement constitué par un couteau à double coupe 3a, 3b (figures 11 et 12) réalisé en acier traité à très haute limite élastique et dont l'épaisseur n'excède par 1,5 mm, chacune des coupes 3a, 3b comportant un bord tranchant 3a', 3b' et un bord opposé plié 3a", 3b" formant renfort. Les couteaux peuvent avoir avantageusement une longueur (en diamètre) de l'ordre de 34 cm.

Chaque couteau 3 est monté sur l'arbre moteur 4a par l'intermédiaire d'un dispositif de fixation sécurisé qui empêche l'éjection des lames en cas de défaillance.

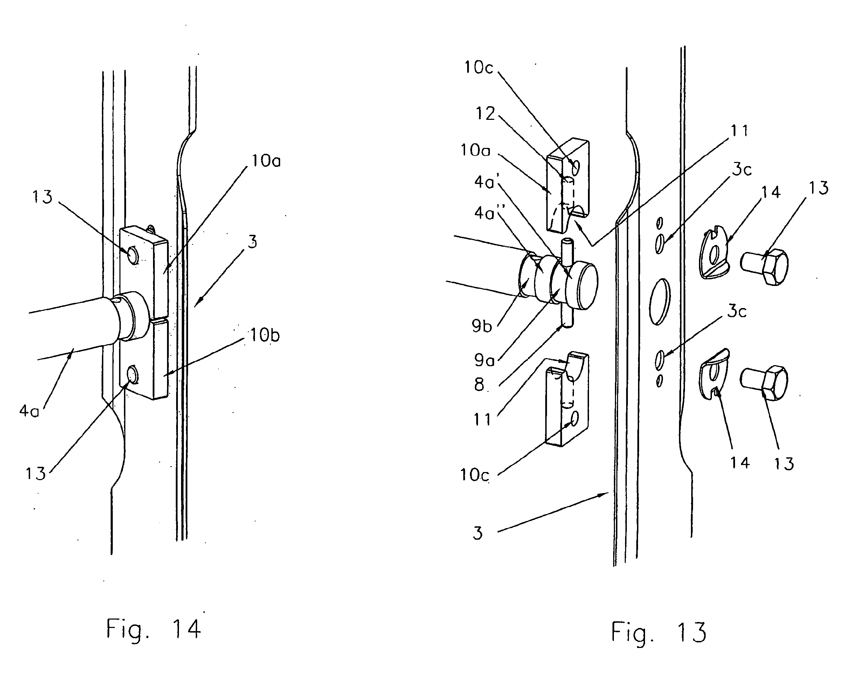

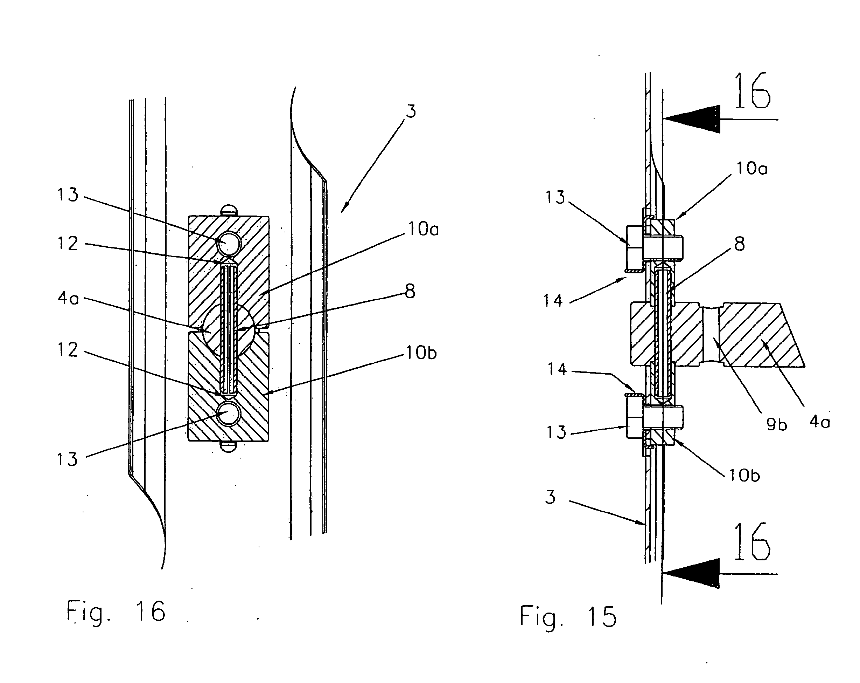

Selon le mode d'exécution illustré aux figures 13 à 16, ce dispositif comprend :
- une goupille 8 traversant un perçage diamétral débouchant dans une gorge périphérique 9a ménagée dans l'extrémité de l'arbre moteur 4a ;
- une barrette de montage en deux parties 10a, 10b comportant, chacune, une extrémité munie d'une échancrure 11 pour se loger dans la gorge circulaire 9a, autour du fond de celle-ci, et un perçage borgne 12 débouchant au centre de l'échancrure 11 pour l'engagement de l'une des portions extrêmes de la goupille 8;
- et des vis 13 traversant des trous 3c prévus dans l'épaisseur du couteau 3 et se vissant, respectivement, dans un taraudage transversal 10c que présente chacune des deux demi-parties 10a, 10b de la barrette de montage.

Des rondelles-arrêtoirs 14 assurent le verrouillage des vis 13 dans la position de montage du couteau 3.

Outre une grande facilité de montage et de démontage des couteaux, ce dispositif a pour avantage d'éviter l'éjection desdits couteaux par suite de la rupture accidentelle de la goupille 8. En effet, dans ce cas, le couteau 3 se trouverait simplement monté fou sur l'arbre moteur 4a, mais ne serait pas détaché de celui-ci.

De préférence, l'extrémité de l'arbre d'entraînement 4a de chaque module de coupe 2 est pourvue de deux gorges périphériques espacées 9a, 9b munie d'un perçage diamétral traversant, pour permettre un montage décalé des barrettes de fixation 10a-10b de deux modules de coupe voisins, de sorte à obtenir un montage rapproché et en quinconce des outils de coupe de la barre de coupe.

D'autre part, chaque outil de coupe 3 comporte un orifice central circulaire 3d autorisant son positionnement autour de l'une ou l'autre des portions d'extrémité cylindriques 4a', 4a" de l'arbre d'entraînement 4a.

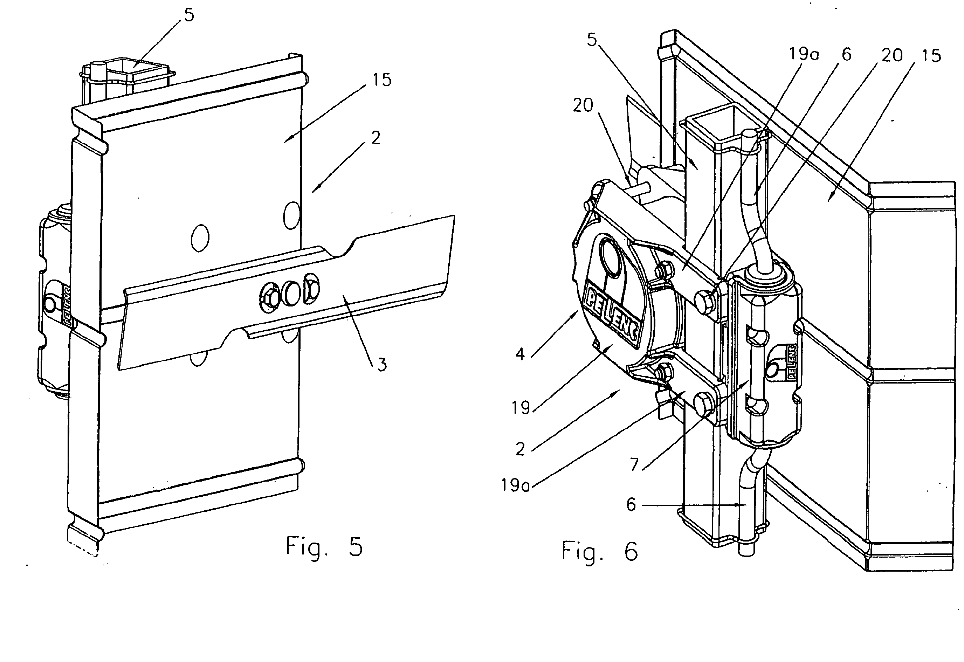

Les deux flasques 19 des paliers du moteur électrique 4 de chaque module de coupe 2 sont conformés et agencés pour permettre, à la fois, la fixation du déflecteur ou carter de protection 15 obligatoire, et la fixation dudit module sur l'ossature 5 de la barre de coupe 1, par exemple, au moyen de boulons 20 (figure 6). D'autre part, ils comportent des fourchettes latérales 19a assurant le pincement et la retenue du boîtier de connexion 7 associé à chaque moteur 4.

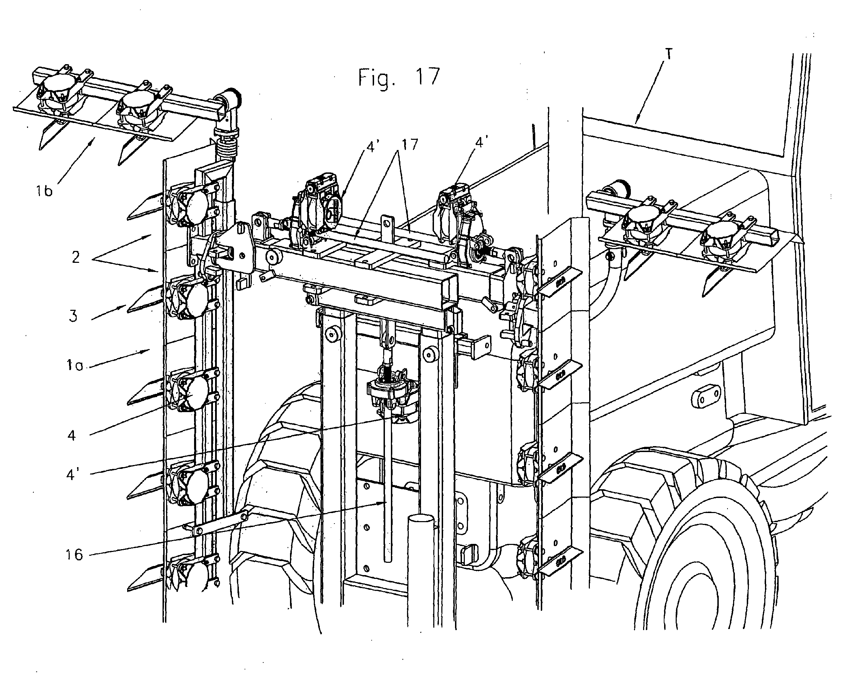

Le réglage en hauteur et le réglage de l'écartement des barres de coupe sont avantageusement assurés par des vérins électriques à vis 16, 17, respectivement, actionnés par des moteurs électriques asynchrones triphasés 4' identiques à ceux des modules de coupe (figure 17). Ils peuvent être commandés par de simples contacteurs-inverseurs du commerce. Les éléments qui supportent les barres de coupe et qui permettent les mouvements verticaux et horizontaux de celles-ci sont réalisés de la façon habituelle.

Il est aussi possible d'équiper les machines, notamment les machines destinées à l'élagage des vignes basses, avec des modules électriques releveurs de végétation 18 permettant de soulever les sarments de vigne posés sur le sol pour les introduire dans l'élément de coupe supérieur, ces releveurs de végétation électriques montés en partie basse des barres de coupe 1 étant actionnés par des moteurs électriques asynchrones triphasés 4" identiques à ceux des modules de coupe, par l'intermédiaire d'un réducteur de vitesse, de façon à tourner à une vitesse plus réduite, par exemple de l'ordre de 400 tours/minute.

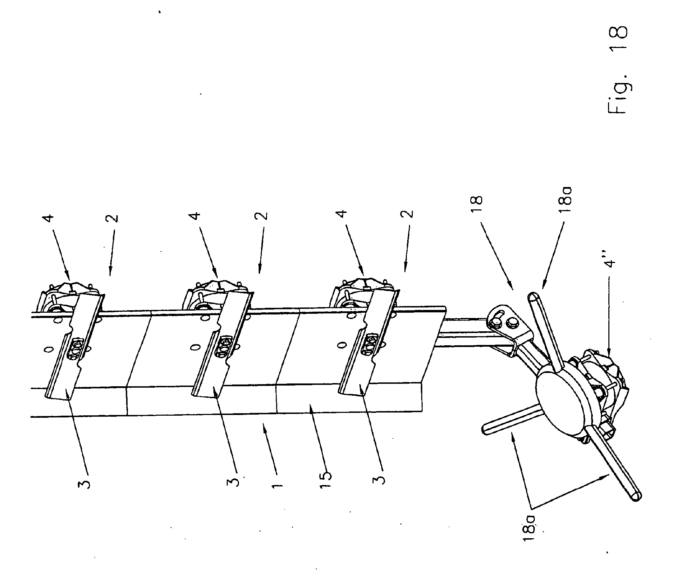

La figure 18 illustre un exemple de réalisation d'un tel releveur rotatif 18 muni de trois doigts radiaux 18a de relevage de végétation.

La machine selon l'invention comprend un alternateur configuré pour produire un courant alternatif triphasé pour l'alimentation des moteurs électriques 4 des modules de coupe 1 et si nécessaire pour l'alimentation des moteurs 4' des vérins électriques de la machine, et/ou des moteurs 4" assurant la rotation des releveurs, et des moyens d'entraînement en rotation du rotor de cet alternateur par le moteur thermique d'un tracteur agricole, par exemple via la prise de force de ce dernier, ou par l'intermédiaire de la courroie de ventilation de celui-ci, ou par le système hydraulique dudit tracteur.

De manière avantageuse, cet alternateur G est configuré pour produire, à la fois, un courant alternatif triphasé, par exemple de tension de 63 V entre phases, et une fréquence de l'ordre de 100 Hertz.

Les différents composants électriques de la machine selon l'invention travaillent sous des tensions d'utilisation relativement basses, plus précisément de l'ordre de 40 V à 75 V ; cette basse tension n'est pas dangereuse, y compris lorsque certains organes électriques de la machine se trouvent en contact avec de l'eau, en cours de travail ; elle offre donc une garantie de sécurité absolue pour les utilisateurs.

L'invention concerne également les machines à fonctions multiples comprenant une écimeuse électrique accouplée à une autre machine agricole utilisable en même temps pour l'accomplissement d'une autre tâche et comportant des organes actifs entraînés électriquement à partir d'une source de production de courant commune, par exemple constituée par l'alternateur précédemment décrit. Par exemple, une telle machine à fonctions multiples peut être constituée par une écimeuse accouplée à un pulvérisateur de produits de traitement divers.

## Revendications

1. Machine d'élagage et/ou d'écimage modulaire, utilisable en agriculture, viticulture, arboriculture fruitière ou forestière, ou pour le débroussaillage, comprenant au moins une barre de couper (1, 1a, 1b, 1c, 1') étant essentiellement constituée par la juxtaposition de modules de coupe (2) comprenant, chacun, un outil de coupe rotatif (3), **caractérisé en ce que** chacun des outils de coupe comprend aussi un moteur électrique asynchrone triphasé (4) d'entraînement individuel en rotation de cet outil.

2. Machine selon la revendication 1, **caractérisée en ce que** la barre de coupe (1, 1') comprend une ossature (5), par exemple constituée par un tube métallique, sur laquelle sont montés, les uns à la suite des autres, les modules de coupe (2), de manière amovible et interchangeable.

3. Machine selon la revendication 2, **caractérisée en ce que** l'ossature (5) de la barre de coupe (1) est rectiligne.

4. Machine selon la revendication 2, **caractérisée en ce que** l'ossature (5') de la barre de coupe (1') présente au moins une portion courbe (5a).

5. Machine selon l'une quelconque des revendications 1 à 4, **caractérisée en ce que** les moteurs électriques de l'ensemble des modules de chaque barre de coupe sont reliés électriquement les uns aux autres, en parallèle, par des câbles à trois fils (6).

6. Machine selon l'une quelconque des revendications 1 à 5, **caractérisée en ce qu'**un boîtier à bornes (7) est associé au moteur électrique asynchrone triphasé (4) de chaque module de coupe (2), ce boîtier permettant l'alimentation dudit moteur et sa connexion en parallèle avec le moteur du ou des modules adjacents, ou avec la source d'alimentation électrique.

7. Machine selon la revendication 6, **caractérisée en ce que** le boîtier de connexion (7) renferme un système de protection (7a) du moteur électrique (4) auquel il est associé, en température et en surintensité.

8. Machine suivant la revendication 7, **caractérisée en ce que** ledit système de protection est constitué par des dispositifs de coupure (7a) d'au moins deux des trois phases du courant triphasé, ces dispositifs pouvant être constitués par des fusibles thermiques, ou par des fusibles d'intensité, ou par des disjoncteurs thermiques, ou par des disjoncteurs d'intensité, ou par des thermistances à coefficient de température positif.

9. Machine, selon l'une quelconque des revendications 1 à 8, **caractérisée en ce que** le moteur électrique asynchrone triphasé (4) de chaque module de coupe (1) est configuré pour pouvoir entraîner l'outil de coupe (3) en rotation, à des vitesses supérieures à 3000 tours/minute.

10. Machine, selon l'une quelconque des revendications 1 à 9, **caractérisée en ce que** le moteur électrique (4) de chaque module de coupe (2) est configuré pour fonctionner sous une fréquence supérieure à 60 Hertz, par exemple sous une fréquence de 100 Hertz.

11. Machine, selon l'une quelconque des revendications 1 à 10, **caractérisée en ce que** deux flasques (19, 19a) des paliers du moteur électrique (4) de chaque module (1) sont conformés et agencés pour permettre, d'une part, la fixation d'un carter de protection (15) et le positionnement du module sur l'ossature (5) et, d'autre part, le pincement du boîtier de connexion (7) associé audit module.

12. Machine, suivant l'une quelconque des revendications 1 à 11, **caractérisée en ce que** l'outil de coupe (3) de chaque module de coupe (1) est monté sur l'arbre moteur (4a) de ce dernier au moyen d'un système sécurisé comprenant : une goupille (8) traversant un perçage diamétral débouchant dans une gorge périphérique (9a) ménagée dans l'extrémité de l'arbre moteur; - une barrette de montage en deux parties (10a, 10b) comportant, chacune, une extrémité échancrée (11) pour se loger dans ladite gorge et autour du fond de celle-ci et un perçage borgne (12) débouchant au centre de l'échancrure (11) pour le logement de l'une des portions extrêmes de la goupille (8), l'outil de coupe (3) étant fixé sur cette barrette de montage au moyen de vis (13) traversant des trous (3c) que présente ledit outil de coupe et se vissant dans des taraudages transversaux (10c) que présente chacune des deux demi-parties (10a, 10b) de la barrette de montage.

13. Machine, selon la revendication 12, **caractérisée en ce que** l'extrémité de l'arbre d'entraînement (4a) de chaque module est munie de deux gorges périphériques (9a, 9b) munies d'un perçage diamétral traversant, pour permettre un montage décalé des barrettes de fixation (10a-10b) de deux modules voisins, de sorte à obtenir un positionnement rapproché et en quinconce des outils de coupe de la barre de coupe.

14. Machine, selon l'une quelconque des revendications 1 à 13, **caractérisée en ce que** les outils de coupe sont constitués par des couteaux (3) à double coupe (3a, 3b) exécutés en acier traité à très haute limite élastique et dont l'épaisseur n'excède par 1,5 mm, chacune des coupes (3a, 3b) comportant un bord tranchant (3a', 3b') et un bord opposé plié formant renfort (3a", 3b").

15. Machine, selon l'une quelconque des revendications 1 à 14, **caractérisée en ce qu'**elle comprend un alternateur configuré pour produire un courant alternatif triphasé pour l'alimentation des moteurs électriques des modules de coupe, et des moyens d'entraînement en rotation du rotor de cet alternateur par le moteur thermique d'un tracteur agricole, par exemple via la prise de force ou via la courroie de ventilation de celui-ci, ou par le système hydraulique dudit tracteur.

16. Machine, selon l'une quelconque des revendications 1 à 15, **caractérisée en ce que** le réglage en hauteur et le réglage de l'écartement des barres de coupe sont assurés par des vérins électriques à vis (16, 17) actionnés par des moteurs électriques asynchrones triphasés (4') identiques à ceux des modules de coupe.

17. Machine, selon l'une quelconque des revendications 1 à 16, comprenant des releveurs de végétation rotatifs (18), **caractérisée en ce que** ces derniers sont constitués par des modules électriques releveurs actionnés par des moteurs électriques asynchrones triphasés (4") identiques à ceux des modules de coupe, associés à un réducteur de vitesse.

18. Machine d'élagage et/ou d'écimage modulaire électrique selon l'une quelconque des revendications 1 à 17, **caractérisée par** son accouplement à une autre machine agricole utilisable en même temps pour l'accomplissement d'une autre tâche et comportant des organes actifs entraînés électriquement à partir d'une source de production de courant commune.

## Claims

1. A modular machine for pruning and/or polling, usable in agriculture, wine growing, fruit or forest arboriculture, or for clearing, comprising at least one cutting bar (1, 1a, 1b, 1c, 1' ) being essentially made by the juxtaposition of cutting modules (2) comprising, each, a rotary cutting tool (3), **characterized in that** each of the cutting tools further comprises a three-phase asynchronous electrical motor (4) for individually driving said tool into rotation.

2. A machine according to claim 1, **characterized in that** the cutting bar (1, 1') comprises a frame (5), for example, made of a metal tube, on which cutting modules (2) are mounted, one following the other, removably and interchangeably.

3. A machine according to claim 2, **characterized in that** the frame (5) of the cutting bar (1) is rectilinear.

4. A, machine according to claim 2, **characterized in that** the frame (5') of the cutting bar (V) has at least one curved portion (5a).

5. A machine according to any of claims 1 to 4, **characterized in that** the electrical engines of the set of modules for each cutting bar are electrically connected to one another, in parallel, by three wire cables (6).

6. A machine according to any of claims 1 to 5, **characterized in that** a terminal housing (7) is associated with the three-phase asynchronous electrical motor (4) of each cutting module (2), said housing providing for the supply of said motor and the connection thereof in parallel with the motor of the adjacent module(s), or with the electric supply source.

7. A machine according to claim 6, **characterized in that** the connecting housing (7) contains a system (7a) for protecting the electrical motor (4) with which it is associated, in temperature and in overintensity.

8. A machine according to claim 7, **characterized in that** said protection system is made of cutting devices (7a) of at least two of the three phases of the three-phase current, said devices being able to comprise thermal fuses, or intensity fuses, or thermal breakers or intensity breakers or positive temperature coefficient thermistors.

9. A machine according to any of claims 1 to 8, **characterized in that** the three-phase asynchronous electrical motor (4) of each cutting module (1) is configured for being able to drive the cutting tool (3) into rotation at speeds higher than 3000 rounds/minute.

10. A machine according to any of claims 1 to 9, **characterized in that** the electrical motor (4) of each cutting module (2) is configured for operating under a frequency higher than 60 Hertz, for example, under a frequency of 100 Hertz.

11. A machine according to any of claims 1 to 10, **characterized in that** two flanges (19, 19a) of the bearings for the electrical motor (4) in each module (1) are conformed and arranged for providing, on the one hand, for the attachment of a protection casing (15) and the positioning of the module on the frame (5) and, on the other hand, for pinching the connection housing (7) associated with said module.

12. A machine according to any of claims 1 to 11, **characterized in that** the cutting tool (3) of each cutting module (1) is mounted on the motor shaft (4a) of the latter by means of a secure system comprising : - a pin (8) crossing a diametrical bore opening into a peripheral groove (9a) arranged in the end of the motor shaft ; - a mounting bar in two parts (10a, 10b) comprising, each, one indented end (11) adapted to be accommodated in said groove and around the bottom of the latter and a recessed bore (12) opening into the centre of the indented end (11) for accommodating one of the extreme portions of the pin (8), the cutting tool (3) being fixed on said mounting bar by means of screws (13) crossing through holes (3c) on said cutting tool and being screwed in transversal threads (10c) on each of both halves (10a, 10b) of the mounting bar.

13. A machine according to claim 12, **characterized in that** the end of the driving shaft (4a) of each module is provided with two peripheral grooves (9a, 9b) provided with a through diametrical bore for providing for an off-axis mounting of the fixing bars (10a-10b) of two adjacent modules, so as to reach a close positioning in staggered row of the cutting tools of the cutting bar.

14. A machine according to any of claims 1 to 13, **characterized in that** the cutting tools are made of blades (3) with double cutting (3a, 3b), made of processed steel with a very high elastic limit and the thickness of which does not exceed 1.5 mm, each of the cutting blades (3a, 3b) comprising a sharp edge (3a', 3b') and a reinforcement opposite folded edge (3a", 3b").

15. A machine according to any of claims 1 to 14, **characterized in that** it comprises an alternator configured for producing a three-phase alternating current for supplying electrical motors of the cutting modules, and means for rotatably driving the rotor of said alternator by the thermal motor of an agriculture tractor, for example via the power plug or via the ventilation belt thereof, or by the hydraulic system in said tractor.

16. A machine according to any of claims 1 to 15, **characterized in that** the adjustment in height and the adjustment of the cutting bar spacing are provided by screw electrical jacks (16, 17) actuated by three-phase asynchronous electrical motors (4') identical to those of the cutting modules.

17. A machine according to any of claims 1 to 16, comprising rotary vegetation lifters (18), **characterized in that** the latter are made of lifting electrical modules actuated by three-phase asynchronous electrical motors (4") identical to those of the cutting modules, associated with a speed reducer.

18. A modular electrical machine for pruning and/or polling, according to any of claims 1 to 17, **characterized by** its coupling with another agriculture machine being used simultaneously for performing another task and comprising active members electrically driven from a common current production source.

## Patentansprüche

1. Modulare Maschine für das Schneiden und/oder den Rückschnitt, verwendbar in Landwirtschaft, Weinanbau, Obstanbau oder Forstwirtschaft, oder für das Auslichten von Unterholz, mindestens einen Schneidebalken (1, 1a, 1b, 1c, 1') umfassend, der im Wesentlichen aus einander gegenübergestellten Schneidemodulen (2) besteht, von denen jedes ein rotierendes Schneidewerkzeug (3) umfasst, **dadurch gekennzeichnet, dass** jedes der Schneidewerkzeuge auch einen asynchronen Drehstrommotor (4) für den individuellen Drehantrieb dieses Werkzeugs umfasst.

2. Maschine nach Anspruch 1, **dadurch gekennzeichnet, dass** der Schneidebalken (1, 1') ein Gerüst (5) umfasst, zum Beispiel gebildet durch ein Metallrohr, auf dem hintereinander die Schneidemodule (2) montiert sind, so dass sie abnehmbar und auswechselbar sind.

3. Maschine nach Anspruch 2, **dadurch gekennzeichnet, dass** das Gerüst (5) des Schneidebalkens (1) geradlinig ist.

4. Maschine nach Anspruch 2, **dadurch gekennzeichnet, dass** das Gerüst (5') des Schneidebalkens (1') mindestens einen gerundeten Abschnitt (5a) aufweist.

5. Maschine nach einem der Ansprüche 1 bis 4, **dadurch gekennzeichnet, dass** die Elektromotoren sämtlicher Module jedes Schneidebalkens elektrisch untereinander, parallel, durch dreiadrige Kabel (6) verbunden sind.

6. Maschine nach einem der Ansprüche 1 bis 5, **dadurch gekennzeichnet, dass** ein Gehäuse (7) mit Anschlussklemmen mit dem asynchronen Drehstrommotor (4) jedes Schneidemoduls (2) verbunden ist, wobei dieses Gehäuse die Stromversorgung des besagten Motors und seine parallele Verbindung mit dem Motor des oder der danebenliegenden Module, oder mit der Stromquelle erlaubt.

7. Maschine nach Anspruch 6, **dadurch gekennzeichnet, dass** das Anschlussgehäuse (7) ein Schutzsystem (7a) des Elektromotors (4) enthält, mit welchem er verbunden ist, für Wärmung und Überintensität.

8. Maschine nach Anspruch 7, **dadurch gekennzeichnet, dass** das besagte Schutzsystem aus Vorrichtungen zur Abschaltung (7a) von mindestens zwei der drei Phasen des Drehstroms besteht und diese Vorrichtungen können aus Thermosicherungen, oder aus Intensitätssicherungen, oder aus Thermoschaltern, oder aus Intensitätsschaltern, oder aus temperaturabhängigen Widerständen mit einem positiven Temperaturkoeffzienten, bestehen.

9. Maschine nach einem der Ansprüche 1 bis 8, **dadurch gekennzeichnet, dass** der asynchrone Drehstrommotor (4) jedes Schneidemoduls (1) konfiguriert ist, um das Schneidewerkzeug (3) zu drehen mit Geschwindigkeiten von 3000 Umdrehungen/Minute.

10. Maschine nach einem der Ansprüche 1 bis 9, **dadurch gekennzeichnet, dass** der Elektromotor (4) jedes Schneidemoduls (2) konfiguriert ist, um mit einer Frequenz von über 60 Hertz zu arbeiten, zum Beispiel mit einer Frequenz von 100 Hertz.

11. Maschine nach einem der Ansprüche 1 bis 10, **dadurch gekennzeichnet, dass** die beiden Scheiben (19, 19a) der Lager des Elektromotors (4) jedes Moduls (1) so konzipiert und angeordnet sind, dass sie einerseits die Befestigung eines Schutzgehäuses (15) und die Positionierung des Moduls auf dem Gerüst (5) erlauben, und andererseits, das Einrasten des mit dem besagten Modul verbundenen Anschlussgehäuses (7).

12. Maschine nach einem der Ansprüche 1 bis 11, **dadurch gekennzeichnet, dass** das Schneidewerkzeug (3) jedes Schneidemoduls (1) auf der Antriebswelle (4a) des Letzteren mittels eines Sicherungssystems montiert ist, umfassend: - einen Bolzen (8), der durch eine diametrale Bohrung führt, die in eine peripher umlaufende Rille mündet (9a), die am äusseren Ende der Antriebswelle angebracht ist; - eine Montageklammer in zwei Teilen (10a, 10b), jedes der beiden Teile am Ende (11) eine Aussparung besitzend, um sich in und um die besagte Rille zu fugen und eine Blindbohrung (12), die in das Zentrum der Aussparung (I1) zwecks Aufnahme eines der äusseren Enden des Bolzen (8) mündet, wobei das Schneidewerkzeug (3) auf dieser Montageklammer mittels von Schrauben (13) befestigt wird, welche Löcher (3c) durchqueren, die das besagte Schneidewerkzeug aufweist, und welche in transversale Innengewinde (10c) geschraubt werden, die jede der beiden Hälften (10a, 10b) der Montageklammer aufweist.

13. Maschine nach Anspruch 12, **dadurch gekennzeichnet, dass** das äussere Ende der Antriebswelle (4a) jedes Moduls mit zwei peripher umlaufenden Rillen (9a, 9b) ausgestattet ist, ausgestattet mit einer diametralen durchquerenden Bohrung, um eine versetzte Montage der Befestigungsklammern (10a, 10b) von zwei benachbarten Modulen zu ermöglichen, um auf diese Weise eine angenäherte und versetzte Anordnung der Schneidewerkzeuge der Schneidebalken zu erreichen.

14. Maschine nach einem der Ansprüche 1 bis 13, **dadurch gekennzeichnet, dass** die Schneidewerkzeuge aus Messern (3) mit einer beidseitigen Schneide (3a, 3b) bestehen, die in behandeltem Stahl mit einer sehr hohen Streckgrenze ausgeführt sind und deren Stärke nicht 1,5mm übersteigt, jedes der Schneideblätter (3a, 3b) besitzt eine Schneidekante (3a', 3b') und eine gegenüberliegende gebogene, Verstärkung bildende Schneidekante (3a" , 3b").

15. Maschine nach einem der Ansprüche 1 bis 14, **dadurch gekennzeichnet, dass** sie einen Wechselstromgenerator umfasst, konfiguriert, um einen Dreiphasenwechselstrom zur Versorgung der Elektromotoren der Schneidemodule zu produzieren, und Mittel für den Drehantrieb des Rotors dieses Generators durch den Verbrennungsmotor eines Landwirtschaftstraktors, z.B. über dessen Zapfwelle oder über dessen Ventilatorriemen, oder durch das Hydrauliksystem des besagten Traktors.

16. Maschine nach einem der Ansprüche 1 bis 15, **dadurch gekennzeichnet, dass** die Einstellung der Höhe und die Einstellung des Abstands der Schneidebalken durch elektrische Schraubenwinden gesichert sind (16, 17), betrieben durch asynchrone Drehstrommotoren (4'), die mit denjenigen der Schneidemodule identisch sind.

17. Maschine nach einem der Ansprüche 1 bis 16, drehende Pflanzen-Hebevorrichtungen umfassend, **dadurch gekennzeichnet, dass** sie aus elektrischen Hebemodulen bestehen, angetrieben durch asynchrone Drehstrommotoren (4"), die mit denjenigen der Schneidemodule identisch sind, verbunden mit einem Untersetzungsgetriebe.

18. Modulare elektrische Maschine für das Schneiden und/oder den Rückschnitt nach einem der Ansprüche 1 bis 17, **dadurch gekennzeichnet** durch ihre Ankopplung an eine andere Landwirtschaftsmaschine, die gleichzeitig für die Realisierung einer anderen Aufgabe einsetzbar ist, und aktive Maschinenteile besitzend, angetrieben ab einer gemeinsamen Stromquelle.
